# EUROPEAN PATENT APPLICATION

(11) **EP 4 559 866 A1**
(43) Date of publication of application: **28.05.2025**
(21) Application number: 23211027.0
(22) Date of filing: 21.11.2023
(51) Int. Cl.: B67D 1/07, B67D 1/08, B67D 1/14, B67D 1/12

(54) **BEVERAGE DISPENSER WITH AN AUTOMATICALLY RETRACTABLE OR STOWABLE TAP**

(71) Applicant: B/E Aerospace, Inc., Winston-Salem, NC 27105 (US)
(72) Inventor: NEGRE, Ergen Sawit, Sto. Tomas BTG 4234 (PH); VILLENA, Kimberley Camille Babao, Batangas City BTG 4200 (PH); CONSUL, Chrizz Ann Platon, Sto. Tomas BTG 4234 (PH); MERCADO, Edmund Carandang, Cuenca BTG 4222 (PH); BERMUDO, Jobelle Cantuba, Lipa City BTG 4217 (PH); LALUNIO, Ezra Ellaine A., Lipa City BTG 4217 (PH)
(74) Representative: Dehns

(57) **Abstract**

A beverage dispenser (100) for a vehicle galley insert. The beverage dispenser comprises a housing (101) comprising at least one beverage dispenser component (120, 130, 140). The beverage dispenser further comprises an electrical actuator (114) configured to perform an action to move the at least one beverage dispenser component between a non-operating position and an operating position. The beverage dispenser further comprises a user interface (110, 111, 112) configured to receive a user input. The beverage dispenser further comprises a programmable controller (113) configured to respond to the user input by instructing one or more said actions of the electrical actuator.

## Description

### TECHNICAL FIELD

The present disclosure relates to a beverage dispenser for a vehicle galley insert, in particular to automated control of the beverage dispenser, and to a method for controlling the beverage dispenser.

### BACKGROUND

Vehicle galleys, such as those in aircraft cabins, provide means to prepare and serve beverages to passengers in the vehicle. Example vehicle galleys include those in aircraft, trains and boats.

Some beverages, such as coffee (including filter coffee and espresso-based beverages), hot chocolate, tea, etc. are made using a multi-step brewing process requiring hot water. Other beverages include still water or other non-brewed beverages such as milk or juice, which may be dispensed at ambient temperature.

Conventional beverage dispenser systems use manual controls to operate one or more components. The manual controls are often elements of a wider assembly and are difficult to replace individually when faulty. Examples of manual controls include levers for locking removable components in place when required, and pushpull trays for holding beverage-making materials (such as disposable coffee pads or tea bags). Hot beverages are made by passing hot water through beverage-making materials and out of a tray outlet. The brewed beverage is received by a beverage container positioned below the tray.

Additionally, manual operation of beverage dispenser parts requires a high number of touch points, which leads to more frequent transmission of pathogens and a higher chance of cross-contamination. Thus, there is an increased risk of bacterial and viral infection to both passengers and the galley crew.

It is therefore an object of the present disclosure to provide a beverage dispenser for vehicle galley inserts and a method of controlling the beverage dispenser, which reduce manual intervention.

### SUMMARY

According to a first aspect of the present disclosure there is provided a beverage dispenser for a vehicle galley insert, the beverage dispenser comprising:
a housing comprising at least one beverage dispenser component;
an electrical actuator configured to perform an action to move the at least one beverage dispenser component between a non-operating position and an operating position;
a user interface configured to receive a user input;
a programmable controller configured to respond to the user input by instructing one or more said actions of the electrical actuator.

The vehicle galley insert may include galley inserts or galley compartments used in commercial passenger vehicles, such as aircraft, trains and boats. The beverage dispenser of the present disclosure may be used to dispense brewed or non-brewed beverages through the at least one beverage dispenser component to passengers and/or crew members in the vehicle. By providing a single beverage dispenser which can dispense both brewed and non-brewed beverages, catering complexity and maintenance costs may be reduced.

The housing may additionally be arranged to house various internal systems of the beverage dispenser, including at least a control electronics system, a heating system and a plumbing system. These systems, or components thereof, may be shared by two or more of the beverage dispenser components to reduce complexity and/or provide a more compact beverage dispenser.

The beverage dispenser component may be configured to receive hot or ambient temperature water from a reservoir, the reservoir being located internally or externally to the housing. Locating the reservoir internally to the housing may provide for a more portable and self-contained beverage dispenser. Locating the reservoir externally to the housing may provide for a lighter and more compact beverage dispenser, which is particularly advantageous when there is limited countertop space.

The received water may be dispensed from the beverage dispenser component directly into a beverage container. Alternatively, the received water may be passed through a beverage making material located in the beverage dispenser component (such as a disposable coffee pad or tea bag) to dispense a brewed beverage into a beverage container.

The at least one electrical actuator may include a servo motor. Servo motors are known in the art to be compact and energy efficient electric motors whilst providing accurate motion control (e.g. of rotational and/or linear position).

The action performed by the at least electrical actuator may move the at least one beverage dispenser component relative to the housing. In a preferred example this movement may be in an inwardly and outwardly direction relative to the user-facing main panel of the housing.

The user interface may comprise one of a touchscreen, touch pad or touch control which is configured to receive a user input.

A variety of interconnected user interface means will be apparent to the skilled person. In a preferred embodiment, the beverage dispenser may comprise more than one user interface. A central user interface may be situated on the main user-facing panel of the beverage dispenser. At least one additional user interface may also be situated on the housing and configured to receive a user input, and may correspond to the at least one beverage dispenser component. The at least one additional user interface may be situated on the main user-facing panel of the beverage dispenser, or on any other surface of the housing accessible to the user.

The central user interface may preferably comprise a display touchscreen which may be configured to display at least one operating mode and/or status. The central user interface touchscreen may further or alternatively be configured to display a variety of user settings and/or a technical manual for user reference.

By providing an electronic user interface which comprises a display touchscreen, the operating mode and/or status may be communicated simply and effectively to the user. This is particularly important in environments such as vehicle galley inserts, which are often cramped and crowded. Additionally, the touchscreen may enable control of the beverage dispenser to be easily modified and/or configured after initial installation of the beverage dispenser.

The at least one additional user interface may preferably comprise a touch pad or touch control specifically associated with the actuation of at least one beverage dispenser component. The presence of additional user interfaces may allow for manual overriding of the brewing process, for example in the event of a mechanical or electrical fault.

The programmable controller may be physically or communicatively coupled to at least one controller of the beverage dispenser. The programmable controller may comprise a memory and one or more processors. The memory may be configured to store one or more sets of program instructions, and the one or more processor may be configured to execute the one or more sets of program instructions. The controller may therefore be loaded with an initial program and subsequently reprogrammed in accordance with user preferences.

By implementing automated control of one or more components of the beverage dispenser, there may be provided more independent self-operation which results in a more simplified and time-efficient user experience. The beverage dispenser of the present disclosure may be more intuitive to learn how to use when compared to conventional beverage dispensers which have increased manual control. Thus, the complexity of user induction and training may be minimised, which may be both time-saving and cost effective. A simplified induction process may also increase the number of galley crew capable of operating the beverage dispenser.

Automating the control of one or more components of the beverage dispenser may also mitigate health and safety concerns associated with conventional beverage dispensers which have increased manual control. For example, the automated movement of the beverage dispenser components may reduce human exposure to hot liquids and hot machine parts. In particular, splashes and spillages, especially of hot beverages, may be reduced. Providing automated control also reduces the number of touch points, which results in more hygienic beverage dispenser surfaces and thus reduces transmission of pathogens and bacterial/viral infections.

In some examples, the controller may be configured to instruct a sequence of at least two actions of the electrical actuator in response to a single user input.

By providing a sequence of more than one action of the electrical actuator from a single user input, automation of the complete beverage making cycle may be optimised and manual user intervention may be minimised. Otherwise, each action of the electrical actuator (e.g. ejection or retraction) may require its own user input, which would increase the overall beverage making time and require the user to maintain an active awareness over the completion status of a single beverage being made. In the case of the beverage being a brewed beverage, the overall brew cycle time may therefore be increased.

In some examples, the sequence of at least two actions may include moving the at least one beverage dispenser component to an operating position where it is configured to dispense a beverage, and moving the at least one beverage dispenser component from the operating position to a non-operating position.

When the sequence of at least two actions comprises moving a beverage dispenser from an operating position to a non-operating position, and back again to the operating position, a complete beverage making cycle may be performed in response to a single user input.

A beverage making cycle may commence with a user placing a beverage container in a beverage receiving position, and optionally loading a beverage making material into the at least one beverage dispenser component. The beverage making cycle may then comprise dispensing a liquid through and out of the at least one beverage dispenser component into the beverage container. The beverage making cycle may end with returning the at least one beverage dispenser component to a position ready for the user to remove the beverage container from the beverage receiving position, and to place a new beverage container to receive the next beverage. At the end of the beverage making cycle the user may also remove any used beverage making material from the at least one beverage dispenser component.

Thus in the non-operating position, when a beverage is not being dispensed, the beverage making material of the at least one beverage dispenser component may be configured to be removed and replaced by the user. Additionally or alternatively, in the non-operating position the at least one beverage dispenser component may be configured to be cleaned.

The at least one beverage dispenser component may be configured to move between two states, i.e. the operating position and the non-operating position. A prolonged stationing of the at least one beverage dispenser component between these two states may therefore be indicative of an obstruction, or of a mechanical or electrical fault.

In some examples, an ultraviolet light source may be configured to clean the at least one beverage dispenser component in the non-operating position.

Bacteria, viruses and/or dirt may accumulate on the at least one beverage dispenser component over multiple uses. These may be cleaned via disinfection, sanitation, germicidal systems, or the like. Various such systems will be apparent to the skilled person for removal of dirt and elimination of pathogens, including HEPA filters, radiation sterilisers, steam sterilisers and chemical sterilisers.

In a preferred example the beverage dispenser may comprise an ultraviolet light source which is configured to emit germicidal ultraviolet light to sterilise the surfaces of the at least one beverage dispenser component.

By directly exposing the surfaces of the at least one beverage dispenser component to ultraviolet light, effective sterilisation may be carried out without user intervention. By being configured to clean in the non-operating position, the at least one beverage dispenser component may be cleaned between uses i.e. at the end of each brew cycle when the at least one beverage dispenser component is not dispensing liquid.

Sterilisation of complex surface profiles in particular may be more effective than conventional chemical cleaning agents due to the uniform surface illumination provided by the ultraviolet light source. Using ultraviolet light also leaves no residue on the sterilised surfaces which could be ingested by the beverage consumer. Furthermore, ultraviolet sterilisation may be associated with lower operation costs compared to other sterilisation methods.

Thus, by using an ultraviolet light source as a sterilisation system, the beverage dispenser of the present disclosure may mitigate transmission of pathogens via its surfaces in a cost-effective, safe and environmentally conscious manner. Thus, the beverage consumers may be presented with a reduced risk of cross-contamination events which could lead to bacterial and/or viral infections.

In some examples, the controller may be configured to automatically operate the ultraviolet light source when the at least one beverage dispenser component is moved to the non-operating position.

By providing an ultraviolet light source which automatically turns on when the at least one beverage dispenser component moves to the non-operating position, manual cleaning is minimised between uses i.e. between brew cycles. This assigns cleaning responsibility of the at least one beverage dispenser component away from the user to the beverage dispenser.

For example, the ultraviolet light source may be disposed within the housing and under the at least one beverage dispenser component when the at least one beverage dispenser component is, in the non-operating position, retracted and/or stowed in the housing. The ultraviolet light may thus be emitted in an upwards direction onto a dispensing surface of the beverage dispenser component, such as a nozzle or a spout.

Additionally or alternatively, the ultraviolet light source may be operated manually such that it turns on when an input signal is received via a user interface, such as a touch button or touchscreen. This may allow for additional control of the cleaning process and/or manual intervention in the case of a mechanical or electrical fault. In some examples, the electrical actuator may be configured to perform one or more actions to move two or more beverage dispenser components.

By using a common electrical actuator to move two or more beverage dispenser components, the mechanical complexity and electrical power consumption of the beverage dispenser may be reduced.

In a first set of examples, in the non-operating position the at least one beverage dispenser component may be stowed within the housing; and in the operating position the at least one beverage dispenser component may extend outwardly from the housing to dispense a beverage into a beverage container.

The at least one beverage dispenser component may comprise a water dispensing faucet. The beverage may include still water, milk, juice, or any other liquid known in the art which may be dispensed at ambient temperature.

By stowing the at least one beverage dispenser component within the housing in the non-operating position (i.e. when a beverage is not being dispensed), space surrounding the beverage dispenser and directly below the beverage dispenser component on the countertop may be saved.

The beverage container may include a carafe, pot, server, flask, glass, mug, cup, kettle or any other container known in the art which is capable of receiving and holding an ambient temperature liquid.

The beverage container may be positioned adjacent to the beverage dispenser, for example under the water dispensing faucet when it extends outwardly from the housing of the beverage dispenser in the operating position. Thus, a beverage receiving position may not need to be provided within a cavity in the housing, resulting in a more compact beverage dispenser and smaller unit size.

In some examples of the first set, the at least one beverage dispenser component may be configured to pivot between the non-operating position and the operating position.

In some examples of the first set, the water dispensing faucet may be configured to rotate by a specific angle (e.g. 90°) from the operating position to the non-operating position, such that it is flush with the housing in the non-operating position. This may reduce the number of protruding (i.e. extending outwardly from the housing) parts when the water dispensing faucet is not in use, thus improving safety.

In some examples of the first set, the pivoting motion may be enacted via a gear (e.g. ring gear) and pinion system, which may translate the rotational motion of the electrical actuator into a precise rotational movement (e.g. through a 90° turn) of the water dispensing faucet. This may provide for more compact internal mechanisms within the housing.

In some examples of the first set, the at least one beverage dispenser component may comprise a flexible hose through which the beverage is dispensed. The flexible hose may be configured to flex when the component moves between the non-operating position and the operating position.

Various means will be apparent to the skilled person to provide a flexible hose for beverage dispensing. In a first preferred example, the flexible hose may be configured to be slack when the water dispensing faucet is in the stowed (non-operating) position, and to be taut when the water dispensing faucet is in the extended (operating) position. In second preferred example, the flexible hose may be configured to be folded when the water dispensing faucet is in the stowed position, and to be straightened when the water dispensing faucet is in the extended position.

Providing a flexible hose disposed in the water dispensing faucet eliminates the need for replumbing to accommodate for both the stowed and extended positions.

In some examples, a proximity sensor may be arranged to detect whether a beverage container is placed in a beverage receiving position. The proximity sensor may be configured to communicate a proximity signal to the controller. The controller may be configured to respond to the proximity signal by instructing one or more said actions of the at least one electrical actuator.

In a preferred example, the one or more said actions may comprise moving the at least one beverage dispenser component from an operating position to a non-operating position. However, the one or more said actions may also comprise moving the at least one beverage dispenser component from a non-operating position to an operating position.

In some examples, the beverage receiving position may be located externally to the beverage dispenser housing and directly below the at least one beverage dispenser component when it is an extended operating position. For example, the beverage receiving position may be located on an external surface such as a countertop.

The proximity sensor may be a capacitive sensor, an inductive sensor, a magnetic sensor, or any other suitable sensor known in the art. The proximity sensor may be physically or communicatively connected to at least one controller.

Providing a proximity sensor connected to the controller may provide for automatic determination of the suitability of beverage dispensing and thus improve operational safety. For example, spillages and/or scalding may be reduced if the at least one beverage dispenser component is moved to a non-operating position when there is no beverage container detected in the beverage receiving position.

In a second set of examples, in the operating position the at least one beverage dispenser component may be stowed within the housing. In the non-operating position, the at least one beverage dispenser component may be ejected from the housing.

The beverage may include coffee (including espresso), tea, or any other hot watersoluble beverage known in the art.

The beverage container may include a carafe, pot, server, flask, glass, mug, cup, kettle or any other container known in the art which is capable of receiving and holding a heated liquid. The beverage container may be insulated or non-insulated. The beverage container may have a handle, sleeve, or any other thermally insulated outer surface.

The beverage dispenser of the present disclosure may comprise a cavity within the housing which is configured to receive the beverage container. The beverage container may be suitably sized to be positioned within the cavity and beneath the at least one beverage dispenser component.

In some examples of the second set, the at least one beverage dispenser component may be configured to linearly move between the operating position and the non-operating position.

The linear movement may comprise a horizontal or vertical movement.

The linear movement may be enacted via a rack and pinion system, which may translate a rotational motion of the electrical actuator into a precise linear movement (e.g. by a specific distance) of the at least one beverage dispenser component.

The at least one beverage dispenser component may comprise a brew tray for holding brew material and a brew head for directing liquid into the brew tray, wherein the brew tray has an operating position positioned below the brew head.

In some examples, the brew tray is moved horizontally between the non-operating position and the operating position, for example horizontal movement into the operating position positioned below the brew head. In some examples, the brew tray is moved horizontally between the operating position wherein the brew tray is stowed within the housing, e.g. stowed below the brew head, and the non-operating position wherein the brew tray is ejected from the housing.

In some examples, the brew head is moved vertically between the non-operating position and the operating position. In some examples, the brew head may be configured to couple with and/or lock onto the brew tray (e.g. via a latching mechanism) in its operating position. For example, the brew head may be moved vertically downwards into its operating position. This may help to secure the brew tray in its operating position whilst a beverage is being dispensed.

In some examples, the sequence of at least two actions may include moving the at least one beverage dispenser component (e.g. brew tray) to an operating position where it is configured to be cleaned instead of dispensing a beverage.

Various cleaning techniques will be apparent to the skilled person. In a preferred example the controller may be configured to operate a water purge cycle when the at least one beverage dispenser component is moved to the operating position for cleaning. This involves water being passed through the at least one beverage dispenser component (e.g. the brew tray) when there is no beverage making material present. This means that cleaning can take place inside the apparatus rather than a user removing the component for manual cleaning.

In some examples, the at least one beverage dispenser component may be surrounded by an outline lighting disposed on the housing. The outline lighting may be configured to indicate the operating mode and/or availability of the at least one beverage dispenser component.

When there is more than one beverage dispenser component, each outline lighting may correspond to each beverage dispenser component. Each outline lighting may be individually controllable or programmable, which may allow for specific software updates to customise the lighting indications according to user preferences.

The operating mode status may comprise stages of the brewing cycle including but not limited to "brewing", "ready", "stand-by", and "cleaning". The availability status may correspond to an "available" or "unavailable" status based on whether the beverage dispenser component is non-operational or operational (including circumstances when the beverage dispenser component is faulty), and thus may provide a visual indication to the user whether or not user intervention is required.

The outline lighting may take the shape of the perimeter of the at least one beverage dispenser component, including but not limited to a rectangle, a rounded rectangle, and a circle. Using a continuous shapes may improve visibility of the outline lighting to the user.

The outline lighting may comprise a plurality of light-emitting diodes (LEDs) or any other light source capable of emitting visible light.

The outline lighting may be capable of visually indicating to the user the operating mode and/or availability of the at least one beverage dispenser component using distinct lighting colours (e.g. red and green), patterns (e.g. flashing) and/or any other suitable animated lighting effects.

By providing an outline lighting surrounding each beverage dispenser component, the beverage dispenser may allow the status of each beverage dispenser component to be communicated clearly and prominently to a user. This is particularly important in environments such as vehicle galley inserts, which are often cramped and crowded.

The outline lighting may also improve user efficiency by reducing the number of checks required to identify the status of the beverage dispenser components. This may allow the user to carry out other tasks in the meantime.

According to a second aspect of the present disclosure there is provided a method of controlling a beverage dispenser for a vehicle galley insert, the beverage dispenser comprising a housing comprising at least one beverage dispenser component, the method comprising:
receiving a user input at a user interface;
responding to the user input by using a programmable controller to instruct one or more actions of an electrical actuator;
controlling the electrical actuator to perform the one or more actions so as to move the at least one beverage dispenser component between a non-operating position and an operating position.

In some examples, the controlling of the electrical actuator may include instructing a sequence of at least two actions of the electrical actuator in response to a single user input.

In some examples, the sequence of at least two actions may include moving the at least one beverage dispenser component to an operating position to dispense a beverage, and moving the least one beverage dispenser component to a non-operating position.

In some examples, the method may include controlling the electrical actuator to perform the one or more actions so as to move two or more beverage dispenser components.

In some examples, the sequence of at least two actions may include moving the at least one beverage dispenser component to an operating position where it is configured to be cleaned instead of dispensing a beverage, and wherein the controller is configured to operate a water purge cycle when the at least one beverage dispenser component is moved to the operating position for cleaning.

It will be appreciated that the above disclosure relating to the beverage dispenser may be equally applied to the method of controlling the beverage dispenser, and vice versa.

Features of any aspect or example described herein may, wherever appropriate, be applied to any other aspect or example described herein. Where reference is made to different examples or sets of examples, it should be understood that these are not necessarily distinct but may overlap.

### BRIEF DESCRIPTION OF THE DRAWINGS

Certain preferred embodiments of the invention will now be described, by way of example only, with reference to the accompanying drawings, in which:
Figure 1 shows a perspective view of a beverage dispenser according to an example of the present disclosure;
Figure 2 shows a control system architecture for a beverage dispenser according to an example of the present disclosure;
Figure 3 shows a perspective view of a water dispensing faucet according to an example of the present disclosure;
Figure 4A shows a cross-sectional view of a brew tray according to an example of the present disclosure;
Figure 4B shows a perspective view of a brew tray according to an example of the present disclosure;
Figure 5A shows a cross-sectional view of a brew head according to an example of the present disclosure;
Figure 5B shows a perspective view of a brew head according to an example of the present disclosure.

### DETAILED DESCRIPTION

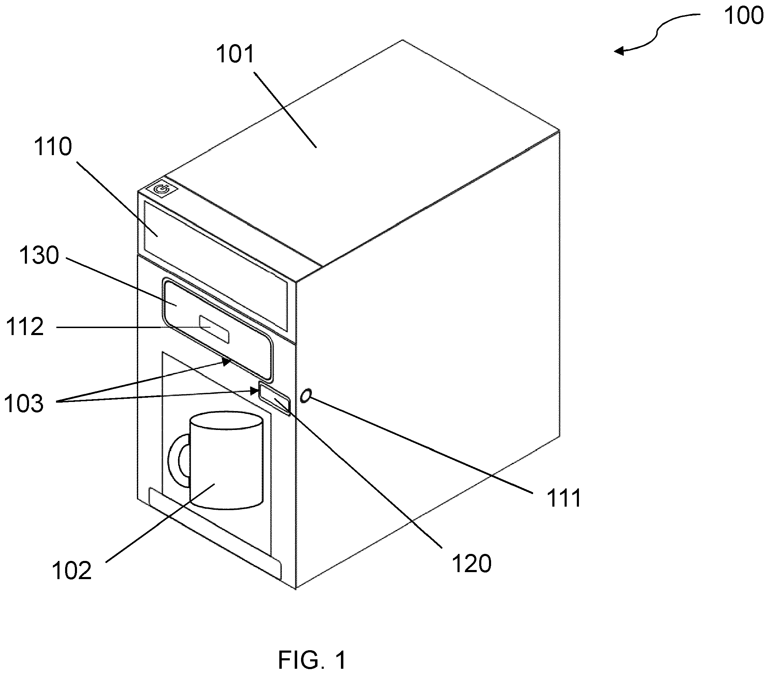

Figure 1 shows a beverage dispenser 100 for a vehicle gallery insert. The beverage dispenser 100 comprises a housing 101, a central user interface 110, and beverage dispenser components including a water dispensing faucet 120 and a brew tray 130.

The housing 101 is configured to provide a space, e.g. a cavity or chamber, defining a beverage receiving position to receive a beverage container 102. The beverage container 102 is however not limited to being positioned in the cavity provided within the housing 101. The housing 101 also houses various internal systems of the beverage dispenser 100, including at least a control electronics system, a heating system and a plumbing system. These systems, or components thereof, can be shared by two or more of the beverage dispenser components.

The central user interface 110 is configured to receive a user input via e.g. a touchscreen. The central user interface 110 also comprises a display device which is configured to display an operating mode and/or status to indicate availability of the beverage dispenser components.

The water dispensing faucet 120 and the brew tray 130 respectively have additional user interfaces 111, 112 each configured to receive a user input. For example, the water dispensing faucet 120 has a touch control 111 and the brew tray has a touch pad 112. These additional user interfaces 111, 112 allow the user to manually override the automated control of their respective beverage dispenser components.

The water dispensing faucet 120 and the brew tray 130 are moveable components of the beverage dispenser 100 which are configured to dispense a liquid. The water dispensing faucet 120 includes a faucet which dispenses water into a beverage container 102, the water being drawn from a water reservoir located internally or externally to the housing 101. The water dispensed from water dispensing faucet 120 is at an ambient temperature. The brew tray 130 is configured to dispense a brewed beverage (such as coffee or tea) into a beverage container 102. Hot water is passed through the brew tray 130 and out of a brew tray outlet.

Outline lighting 103 is disposed on the housing 101 to surround the beverage dispenser component. The outline lighting 103 is configured to indicate the operating mode and/or status of the beverage dispenser components via e.g. distinct lighting colours, flashing or any other lighting effect. The outline lighting 103 may comprise a plurality of light-emitting diodes (LEDs).

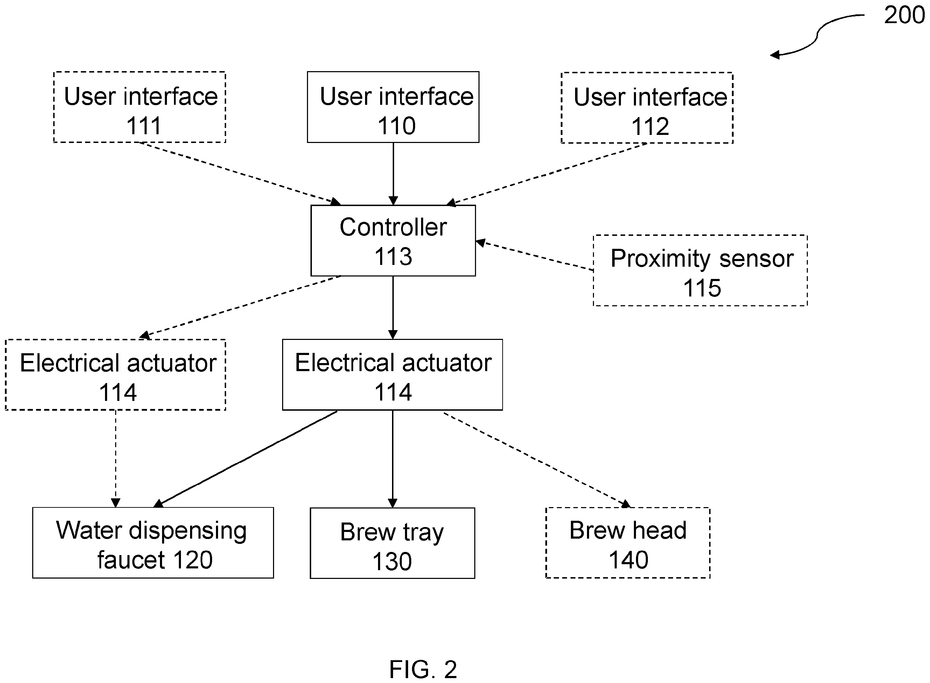

Figure 2 shows a control system architecture 200 for the beverage dispenser 100. The beverage dispenser 100 comprises a controller 113 and at least one electrical actuator 114 which is used to control automatic operation of the beverage dispenser component(s).

The central user interface 110, the touch control 111 and the touch pad 112 are physically or communicatively coupled to the controller 113. The controller 113 includes a memory and one or more processors, and is configured to be programmable. The memory is configured to store one or more sets of program instructions, and the processor(s) are configured to execute the one or more sets of program instructions.

The controller 113 is also physically or communicatively connected to a proximity sensor 115. The proximity sensor 115 is configured to detect whether a beverage container 102 is placed in a beverage receiving position (e.g. below the brew tray outlet or below the water dispensing faucet hose). In response to a proximity signal, the controller instructs one or more actions of the electrical actuator 114. For example, the water dispensing faucet 120 may be moved from an operating to a non-operating position when there is no beverage container 102 detected below the water dispensing faucet 120.

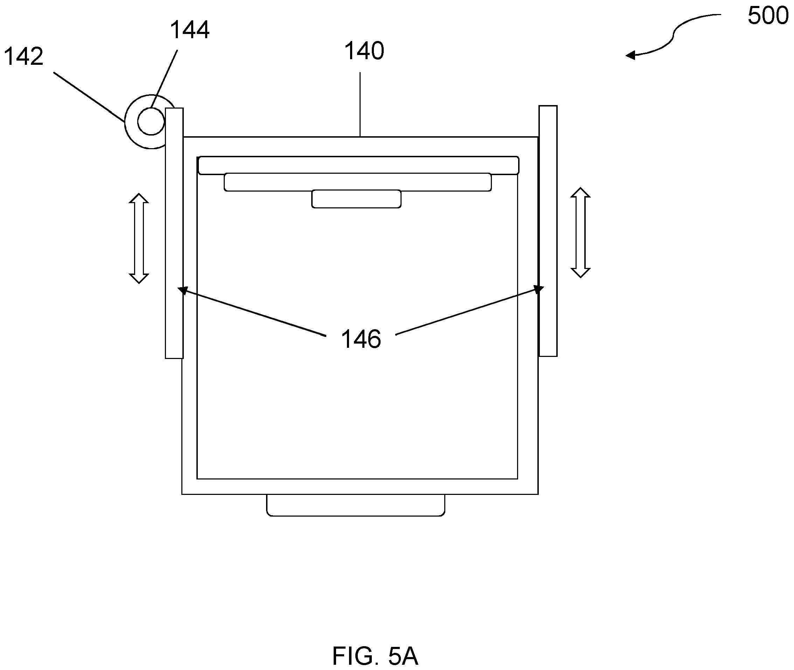

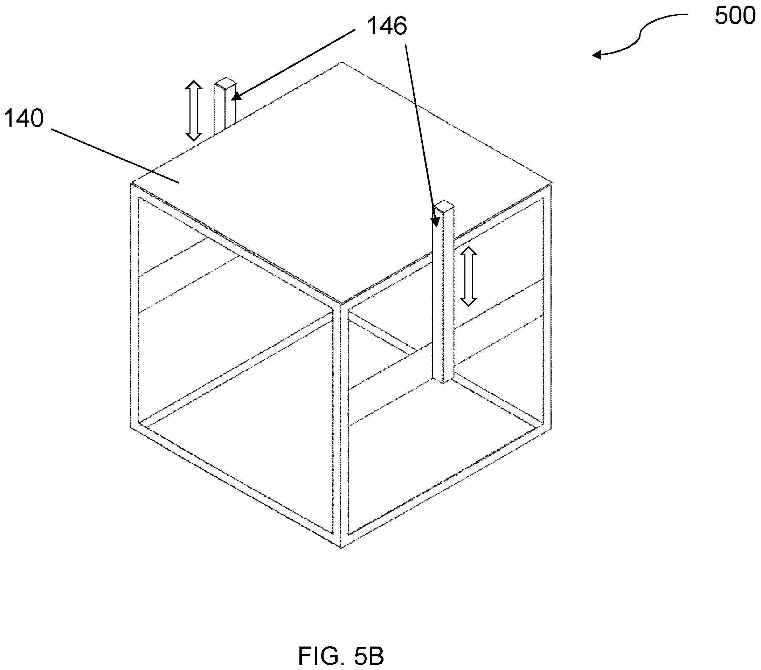

Also seen in Figure 2 is a brew head 140 as a possible beverage dispenser component, which will be described in more detail with reference to Figures 5A and 5B.

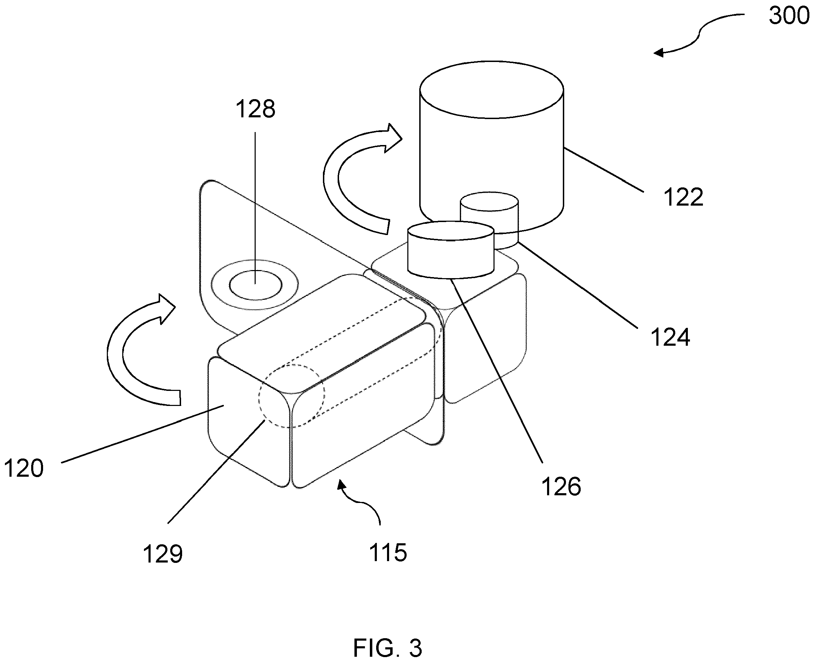

Figure 3 shows a mechanism 300 for operating the water dispensing faucet 120. The electrical actuator 114 is a servo motor 122, which is configured to a receive one or more instructions from the controller 113 to move the water dispensing faucet 120.

The servo motor 122 is operatively connected to a pinion 124. The pinion 124 is configured to rotate through a precise angle when the servo motor 122 receives an instruction from the controller 113. The pinion 124 is configured to mechanically engage with a gear 126 which is operatively connected to the water dispensing faucet 120. The rotational energy of the pinion 124 is transmitted to the gear 126, which in turn pivots the water dispensing faucet 120 between a stowed position and an extended position with respect to the housing 101.

In the extended position, the water dispensing faucet 120 is configured to dispense water into a beverage container 102. In the stowed position, the water dispensing faucet 120 is configured to be cleaned.

When in the stowed position, an ultraviolet (UV) light source 128 is disposed under the water dispensing faucet to sterilise the water dispensing faucet 120. The UV light source 128 may be operated automatically such that it automatically turns on when the water dispensing faucet 120 is in the stowed position. The UV light source 128 may additionally or alternatively be operated manually such that it turns on when an input signal is received via a user interface.

The water dispensing faucet 120 comprises a flexible hose 129 which is configured to flex when the water dispensing faucet 120 moves between the stowed and extended positions. In one example, the flexible hose 129 may be slack when the water dispensing faucet 120 is in the stowed position, and taut when the water dispensing faucet 120 is in the extended position. In another example, the flexible hose 129 may be folded when the water dispensing faucet 120 is in the stowed position, and straightened when the water dispensing faucet 120 is in the extended position.

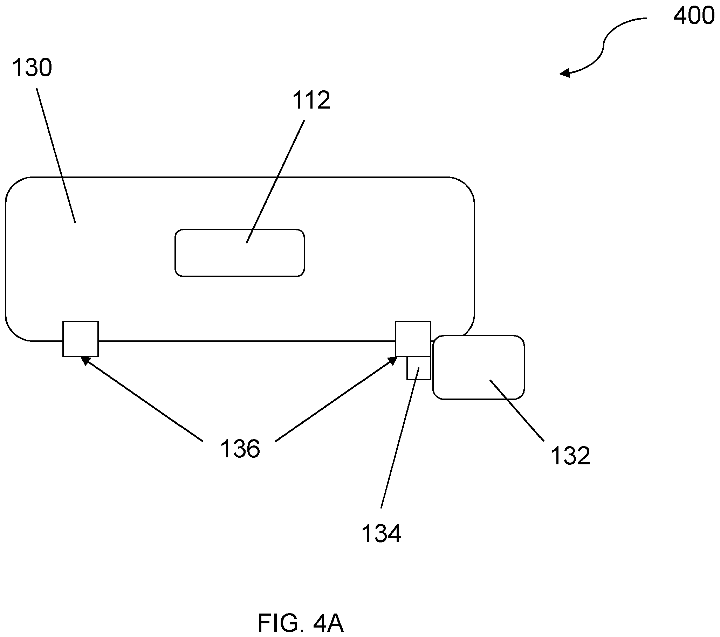

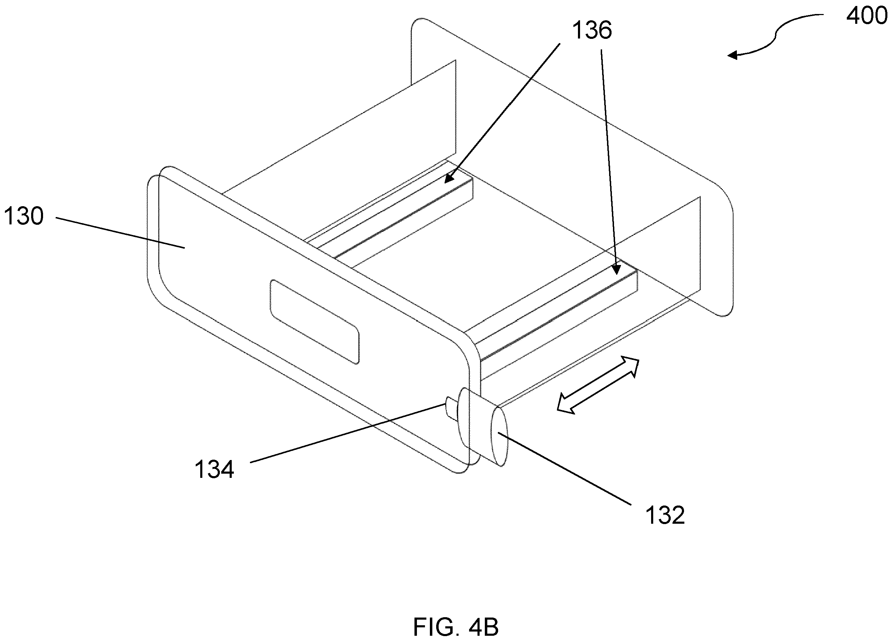

Figures 4A and 4B show a mechanism 400 for operating the brew tray 130. The electrical actuator 114 is a servo motor 132, which is configured to a receive one or more instructions from the controller 113 to move the brew tray 130.

The servo motor 132 is operatively connected to a pinion 134. The pinion 134 is configured to rotate through a precise angle when the servo motor 132 receives an instruction from the controller 113. The pinion 134 is configured to mechanically engage with a horizontal rack 136 which is operatively connected to the brew tray 130. The rotation of the pinion 134 across the horizontal rack 136 results in horizontal linear motion (of a specific distance) of the brew tray 130 between a stowed and an extended position with respect to the housing 101.

In the stowed position, the brew tray 130 is configured to dispense a brewed beverage (e.g. coffee or tea) into a beverage container 102. In the extended position, the brew tray 130 is configured to be refilled by the user, i.e. by removing the used beverage making material (e.g. disposable coffee pads or tea bags) and replacing in the brew tray 130 a new beverage making material.

The controller 113 is further configured to operating a water purge cleaning cycle of the brew tray 130 and/or brew head 140 in the operating position. The water purge cleaning requires the user to first remove any used beverage making materials when the brew tray 130 is in the non-operating (ejected) position, and to place a waste water container in the beverage receiving position. Then, when the brew tray 130 is in the operating (stowed) position, water is passed from the brew head into the brew tray in order to clean the brew tray and/or the brew head. The waste water from the water purge cleaning is disposed through the outlet of the brew tray and into the waste water container below.

Figures 5A and 5B show a mechanism 500 for operating the brew head 140. The electrical actuator 114 is a servo motor 142, which is configured to a receive one or more instructions from the controller 113 to move the brew head 140.

The servo motor 142 is operatively connected to a pinion 144. The pinion 144 is configured to rotate through a precise angle when the servo motor 142 receives an instruction from the controller 113. The pinion 144 is configured to mechanically engage with a vertical rack 146 which is operatively connected to the brew head 140. The rotation of the pinion 144 across the vertical rack 146 results in vertical linear motion of the brew head 140 between a stowed and an extended position with respect to the housing 101.

In the extended position, the brew head 140 is configured to engage with and direct liquid, e.g. hot water, into the brew tray.

In some examples, instead of separate servo motors 122, 132, 142, a single electrical actuator 114 may be configured to move two or more of the water dispensing faucet 120, the brew tray 130, and the brew head 140.

The controller 113 (seen in Figure 2) is further configured to instruct a sequence of at least two actions of the electrical actuator 114 in response to a single user input e.g. one extending action and one stowing action of the water dispensing faucet 120.

It will be appreciated by those skilled in the art that the invention has been illustrated by describing one or more specific embodiments thereof, but is not limited to these embodiments; many variations and modifications are possible, within the scope of the accompanying claims.

### List of references

- 100 -: beverage dispenser
101 - housing
110 - central user interface (touchscreen)
120 - water dispensing faucet
111 - additional user interface (water dispensing faucet touch control)
130 - brew tray
112 - additional user interface (brew tray touch pad)
102 - beverage container
103 - outline lighting
- 200 -: control system architecture
113 - controller
114 - electrical actuator(s)
115 - proximity sensor
140 - brew head
- 300 -: mechanism for water dispensing faucet
122 - servo motor
124 - pinion
126 - gear
128 - UV light source
129 - flexible hose
- 400 -: mechanism for brew tray
132 - servo motor
134 - pinion
136 - horizontal rack
- 500 -: mechanism for brew head
142 - servo motor
144 - pinion
146 - vertical rack

## Claims

1. A beverage dispenser (100) for a vehicle galley insert, the beverage dispenser comprising:
a housing (101) comprising at least one beverage dispenser component (120, 130, 140);
an electrical actuator (114) configured to perform an action to move the at least one beverage dispenser component between a non-operating position and an operating position;
a user interface (110, 111, 112) configured to receive a user input;
a programmable controller (113) configured to respond to the user input by instructing one or more said actions of the electrical actuator.

2. The beverage dispenser according to claim 1, wherein the controller is configured to instruct a sequence of at least two actions of the electrical actuator in response to a single user input.

3. The beverage dispenser according to claim 2, wherein the sequence of at least two actions includes moving the at least one beverage dispenser component (120, 130, 140) to an operating position where it is configured to dispense a beverage and moving the at least one beverage dispenser component from the operating position to a non-operating position.

4. The beverage dispenser according to claim 3, further comprising an ultraviolet light source (128) configured to clean the at least one beverage dispenser component (120, 130, 140) in the non-operating position.

5. The beverage dispenser according to claim 4, wherein the controller is configured to automatically operate the ultraviolet light source (128) when the at least one beverage dispenser component (120, 130, 140) is moved to the non-operating position.

6. The beverage dispenser according to any preceding claim, wherein the electrical actuator is configured to perform one or more actions to move two or more beverage dispenser components (120, 130, 140).

7. The beverage dispenser according to any preceding claim, wherein:
in the non-operating position the at least one beverage dispenser component (120) is stowed within the housing; and
in the operating position the at least one beverage dispenser component (120) extends outwardly from the housing to dispense a beverage into a beverage container (102).

8. The beverage dispenser according to claim 7, wherein the at least one beverage dispenser component (120) is configured to pivot between the non-operating position and the operating position.

9. The beverage dispenser according to claim 7 or 8, wherein the at least one beverage dispenser component (120) comprises a flexible hose (129) through which the beverage is dispensed, the flexible hose being configured to flex when the beverage dispenser component moves between the non-operating position and the operating position.

10. The beverage dispenser according to any preceding claim, further comprising a proximity sensor (115) arranged to detect whether a beverage container (102) is placed in a beverage receiving position, the proximity sensor being configured to communicate a proximity signal to the controller, the controller configured to respond to the proximity signal by instructing one or more said actions of the at least one electrical actuator.

11. The beverage dispenser according to any of claims 1 to 6, wherein:
in the operating position the at least one beverage dispenser component (130) is stowed within the housing; and
in the non-operating position the at least one beverage dispenser component (130) is ejected from the housing.

12. The beverage dispenser according to any of claims 1 to 6 or 11, wherein the at least one beverage dispenser component (130, 140) is configured to linearly move between the operating position and the non-operating position.

13. The beverage dispenser according to claim 2, wherein the sequence of at least two actions further includes moving the at least one beverage dispenser component (130, 140) to an operating position where it is configured to be cleaned instead of dispensing a beverage, and wherein the controller is configured to operate a water purge cycle when the at least one beverage dispenser component is moved to the operating position for cleaning.

14. The beverage dispenser according to any preceding claim, wherein the at least one beverage dispenser component (120, 130, 140) is surrounded by an outline lighting (103) disposed on the housing, the outline lighting being configured to indicate the operating mode and/or availability of the at least one beverage dispenser component.

15. A method of controlling a beverage dispenser for a vehicle galley insert, the beverage dispenser comprising a housing comprising at least one beverage dispenser component, the method comprising:
receiving a user input at a user interface;
responding to the user input by using a programmable controller to instruct one or more actions of an electrical actuator;
controlling the electrical actuator to perform the one or more actions so as to move the at least one beverage dispenser component between a non-operating position and an operating position.
